## Europäisches Patentamt

## European Patent Office

## Office européen des brevets

(19)

(11) Veröffentlichungsnummer: **0 084 858**
**B1**

(12) # EUROPÄISCHE PATENTSCHRIFT

(45) Veröffentlichungstag der Patentschrift:
02.04.86

(51) Int. Cl.⁴: **B 65 G 49/06**, B 60 P 3/00

(21) Anmeldenummer: **83100464.3**

(22) Anmeldetag: **20.01.83**

(54) **Glastransportgestell.**

(30) Priorität: **25.01.82 DE 8201720 U**

(43) Veröffentlichungstag der Anmeldung:
**03.08.83 Patentblatt 83/31**

(45) Bekanntmachung des Hinweises auf die Patenterteilung:
**02.04.86 Patentblatt 86/14**

(84) Benannte Vertragsstaaten:
**AT BE CH DE FR GB IT LI LU NL SE**

(56) Entgegenhaltungen:
**DE - B - 2 207 884**
**FR - A - 1 176 630**
**US - A - 1 836 362**

(73) Patentinhaber: **Heinrich Kerschgens
Stahlkonstruktionen GmbH, Kupfermeisterstrasse 16-18,
D-5190 Stolberg (DE)**

(72) Erfinder: **Niesen, Ferdinand, Dipl.-Ing.,
Rehmannstrasse 12, D-5100 Aachen (DE)**

(74) Vertreter: **König, Werner, Dipl.-Ing.,
Habsburgerallee 23-25, D-5100 Aachen (DE)**

## Beschreibung

Die Erfindung betrifft gemäss Oberbegriff des Anspruchs 1 ein Glastransportgestell mit einer Reihe von parallel zueinander angeordneten, miteinander verbundenen A-förmigen Anlageböcken, die gemeinsamm mit Anlageleisten zwei nach oben hin aufeinanderzu geneigte Anlageflächen für Glastafeln bilden, und mit quer zur Längsrichtung des Gestells verlaufenden, mit Auflagern für die Glasscheiben versehenen Basisschienen.

Bekannte Glastransportgestelle der hier betroffenen Art (siehe beispielsweise US-A-1 836 362 bzw. DE-C-2 207 884) werden zum Transport von Glastafeln verwendet, welche zu mehreren an die beiden Anlageflächen angelegt werden. Die Transportgestelle werden auf geeignete Fahrzeuge aufgesetzt, insbesondere auf Speziallastwagen. Es ist dabei immer das Bestreben, das Eigengewicht dieser Transportgestelle so gering wie möglich zu halten, um folglich eine möglichst grosse Menge von Glasscheiben transportieren zu können.

Die Aufgabe der vorliegenden Erfindung besteht nun darin, eine Gewichtseinsparung bei einfacher konstruktiver Ausbildung dadurch zu erreichen, dass die Steifigkeit des Gestells primär durch ein zentrales Tragelement gesichert wird.

Zur Lösung dieser Aufgabe ist bei einem Glastransportgestell der eingangs erwähnten Art erfindungsgemäss vorgesehen, dass die Anlageböcke miteinander über einen in Längsrichtung des Gestells über dessen gesamte Länge verlaufenden Dreigurt oder einen Viergurt gekoppelt sind, wobei zwei der durchgehenden Elemente des Gurtes in einer waagerechten Ebene liegen, während das dritte Gurtelement bzw. das dritte und vierte Gurtelement mit Abstand darüber angeordnet ist/sind, und wobei ferner die Gurtelemente durch Streben miteinander verbunden sind. Ein solches Glastransportgestell ergibt bei relativ geringem Materialaufwand und Gewicht eine hohe Eigensteifigkeit und führt somit dazu, dass bei gleicher Tragfähigkeit das Eigengewicht des Gestells reduziert und damit die mögliche Nutzlast des Lastwagens erhöht werden kann.

Es entspricht einem weiteren Vorschlag der Erfindung, dass die Gurtelemente Rohre sein können.

Weiter sieht die Erfindung vor, dass die beiden unteren Gurtelemente durch Bohrungen in den Basisschienen hindurchgeführt sein können. Dies führt zu einer besonders stabilen Verbindung zwischen dem als Gurt ausgebildeten zentralen Tragelement und den Basisschienen, welche die Auflager des Gestells bilden.

Weiter sieht die Erfindung vor, dass zumindest die beiden äusseren Anlageböcke in Höhe des oberen Gurtelements an diesem abgestützt sein können. Eine solche Abstützung ergibt eine weitere Aussteifung des gesamten Gestells.

Weiter sieht die Erfindung vor, dass die Anlageböcke an ihren unteren Enden jeweils mit einer Basisschiene und die Basisschienen über den Gurt miteinander verbunden sein können.

Weiter sieht die Erfindung vor, dass die Anlageböcke lösbar direkt oder indirekt mit dem Gurt verbunden sein können. Eine solche lösbare Verbindung zwischen den Anlageböcken einerseits und dem Gurt sowie den Basisschienen andererseits macht es möglich, das Glastransportgestell bei Leerfahrten zu demontieren, wobei die demontierten Gestellteile erheblich geringeren Stauraum benötigen als das komplett montierte Gestell. Dadurch wiederum kann erreicht werden, dass das jeweils verwendete Fahrzeug neben einem so demontierten Glastransportgestell zusätzliche Fracht transportieren kann. Dies ist insbesondere dann von Interesse, wenn das Glastransportgestell für den Transport von Glastafeln über weitere Strecken eingesetzt wird. Ein Glastransportgestell mit unlösbar verbundenen Anlageböcken erfordert dagegen, dass das Spezielfahrzeug allein mit dem leeren Glastransportgestell die Rückfahrt aufnimmt, ohne dabei irgendwelche zusätzliche Fracht befördern zu können.

Weiter sieht die Erfindung vor, dass an Streben des Gurtes Taschen zur lösbaren Aufnahme der unteren Enden der Anlageböcke vorgesehen sein können.

Weiter sieht die Erfindung vor, dass die unteren Enden der Anlageböcke mit den Taschen über Sicherungsbolzen lösbar verbunden sein können.

Weiter sieht die Erfindung vor, dass die Anlageleisten jeweils zwischen zwei Anlageböcken sich erstrecken und an ihren Enden in an den Anlageböcken vorgesehene Auflager lösbar eingreifen können. Durch diese Anordnung der Anlageleisten wird die Auflage für die Glasscheiben verbessert, und im übrigen erfolgt dadurch eine gegenseitige Abstützung der Anlageböcke aneinander.

Weiter sieht die Erfindung vor, dass die Anlageböcke und/oder die Anlageleisten im wesentlichen aus Leichtmetall bestehen können. Dies führt in jedem Fall zu einer Gewichtseinsparung. Im übrigen erleichtert es in der demontierbaren Ausführung des Glastransportgestells die Montage erheblich. Sie ist dann ohne Verwendung von Kranen möglich.

Weiter sieht die Erfindung vor, dass das Glastransportgestell als Innenladergestell ausgebildet sein kann. Dies bedeutet, dass dieses Gestell von speziell ausgebildeten Lastkraftwagen aufgenommen werden kann, die einen in Längsrichtung durchgehenden, an der Rückseite des Fahrzeugs zu öffnenden Aufnahmeraum haben, der beiderseits Auflagerschienen trägt, auf denen die gegenüberliegenden Enden der Basisschienen ruhen. Im demontierten Zustand des Glastransportgestells lassen sich die Anlageböcke sowie die Anlageleisten im wesentlichen beiderseits des Gurtes in dem unteren Bereich des Aufnahmeraums des Spezialfahrzeugs unterbringen. Dieser Raum kann dann überdeckt werden. so dass eine Ladefläche für anderweitige Zuladung entsteht.

Schliesslich sieht die Erfindung vor, dass die Anlageböcke direkt oder indirekt mit dem Gurt unlösbar verbunden und miteinander verstrebt sind, und dass das Gestell mit einer Kranaufhängung versehen ist.

Im folgenden Teil der Beschreibung werden einige Ausführungsformen des neuerungsgemässen Glastransportgestells anhand von Zeichnungen beschrieben. Es zeigt:

Fig. 1 eine Vorderansicht einer Ausführungsform des neuerungsgemässen Glastransportgestells mit Kranaufhängung in einseitig beladenem Zustand,

Fig. 2 eine Seitenansicht des Gestells nach Fig. 1 im unbeladenen Zustand,

Fig. 3 eine Vorderansicht einer demontierbaren Ausführungsform des neuerungsgemässen Glastransportgestells in einseitig beladenem Zustand,

Fig. 4 eine Seitenansicht des Gestells nach Fig. 3,

Fig. 5 in grösserem Massstab die Verbindung zwischen dem unteren Ende eines Anlagebockes und einem an einer Strebe befestigten Schuh bei dem Glastransportgestell nach den Fig. 3 und 4,

Fig. 6 eine Seitenansicht betreffend die in Fig. 5 dargestellte Einzelheit,

Fig. 7 eine in grösserem Massstab dargestellte Seitenansicht der lösbaren Verbindung zwischen Anlageleisten und einem Anlagebock bei einem Glastransportgestell nach den Fig. 3 und 4,

Fig. 8 eine Darstellung der Einzelheit gemäss Fig. 7 in Richtung des Pfeils VIII in Fig. 7 gesehen und

Fig. 9 eine schematische Darstellung eines Viergurtes in Vorderansicht.

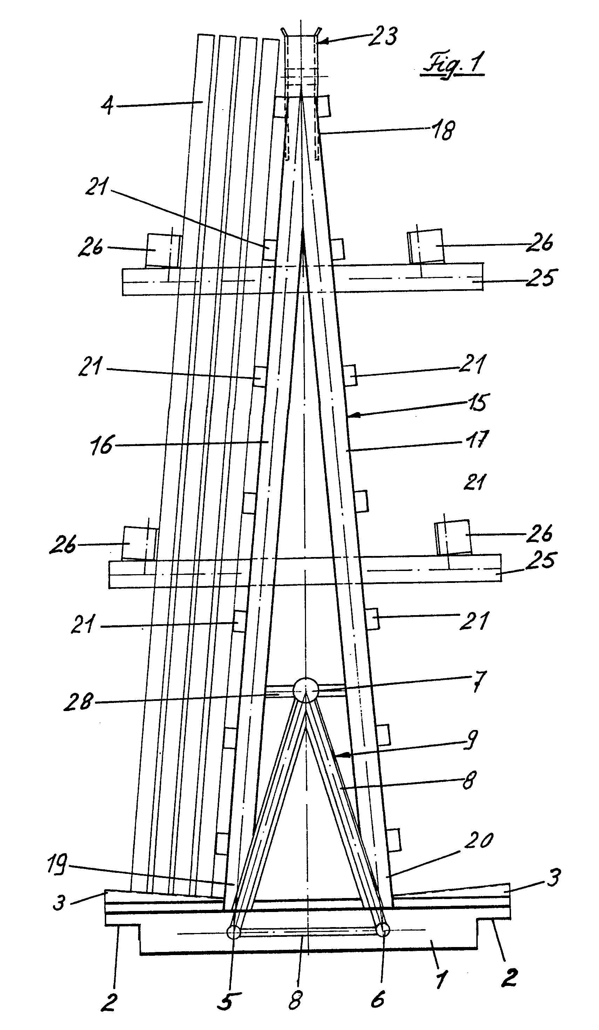

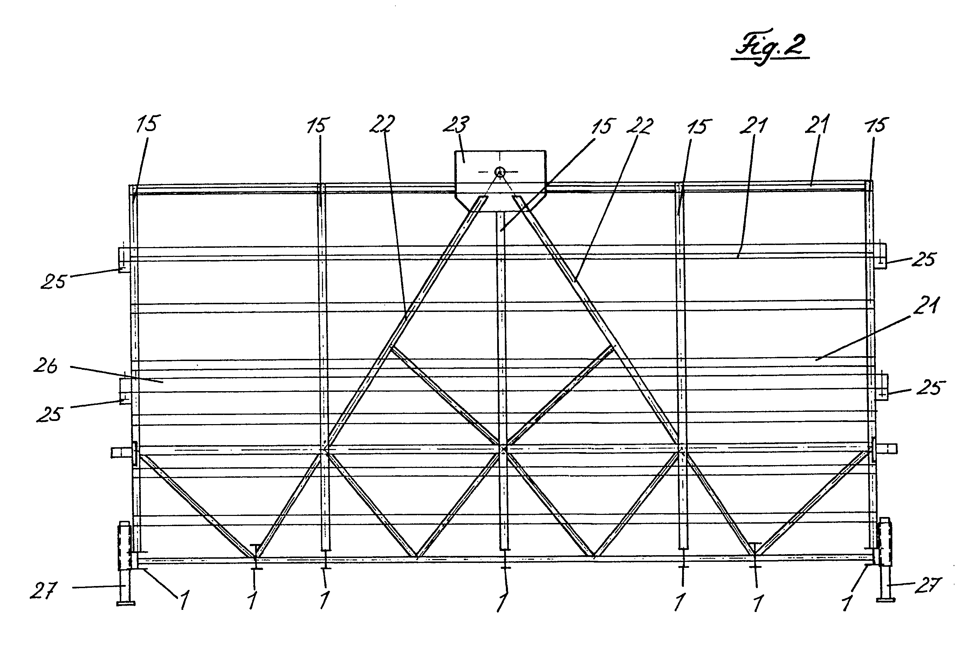

Die in den Fig. 1 und 2 dargestellte Ausführungsform des neuerungsgemässen Glastransportgestells weist eine Anzahl von parallel zueinander und quer zur Längsrichtung des Gestells verlaufenden Basisschienen 1 auf, welche im Ausführungsbeispiel Doppel-T-Profil haben. Die Basisschienen 1 bilden an ihren beiden Enden jeweils eine Auflageschulter 2. Diese Schultern kommen auf entsprechenden Auflagern eines speziell ausgebildeten, hier nicht im einzelnen beschriebenen Lastkraftwagens zur Auflage. Die Basisschienen 1 sind in ihrem oberen Bereich mit Keilstücken 3 versehen, auf denen die unteren Kanten der zu transportierenden Glasscheiben 4 zur Auflage kommen. Diese Keilstücke 3 können an ihrer Oberseite mit einem geeigneten Belag versehen sein.

Die Basisschienen 1 weisen jeweils zwei Bohrungen auf, durch die Rohre 5, 6 hindurchgeführt und im Durchtrittsbereich mit den Basisschienen 1 fest verbunden sind. Die Rohre 5, 6 erstrecken sich über die gesamte Länge des Glastransportgestells. Sie liegen in einer waagerechten Ebene. Mit Abstand oberhalb dieser Ebene ist mittig zwischen den Rohren 5, 6 ein weiteres durchgehendes Rohr 7 vorgesehen. Die Rohre 5, 6, 7 verlaufen parallel zueinander und sind durch Streben 8 zu einem Dreigurt 9 verbunden. Die Rohre 5, 6, 7 bilden dabei die durchgehenden Gurtelemente.

Das Glastransportgestell weist ferner eine Anzahl von Anlageböcken 15 auf, die sich in einer Vorderansicht des Gestells im wesentlichen A-förmig darstellen. Alle Anlageböcke 15 liegen in parallel zueinander verlaufenden senkrechten Ebenen. Sie werden jeweils im wesentlichen aus zwei Trägern 16, 17 gebildet, die an ihren oberen Enden bei 18 fest miteinander verbunden sind, während sie bei dieser Ausführungsform des Gestells an ihren unteren Enden 19, 20 mit einer Basisschiene 1 in fester Verbindung stehen. Auf die voneinander abgewandten Seiten der Träger 16, 17 sind Anlageleisten 21 aufgesetzt, die eine Anlagefläche für die Glasscheiben 4 bilden. Diese Anlageleisten 21 können auf ihrer den Glasscheiben 4 zugewandten Seite mit einem nicht dargestellten nachgiebigen Belag versehen sein.

Streben 22 führen zu einer Aussteifung des gesamten Gestells und machen es somit kranbar. Eine Kranaufhängung 23 ist in der Längsmitte des Gestells an dessen Oberseite vorgesehen.

Die beiden äusseren Anlageböcke 15 des Glastransportgestells tragen mehrere parallel zu den Basisschienen 1 verlaufende Schienen 25, auf denen balkenartige Elemente 26 festgelegt werden können, die auf der Aussenseite eines aus Glasscheiben 4 bestehenden Pakets angeordnet werden können, um das Paket am Gestell zu sichern.

Zudem sind die beiden äusseren Anlageböcke 15 über Streben 28 an dem oberen Rohr 7 des Dreigurts 9 abgestützt.

Darüber hinaus sind die beiden äusseren Basisschienen 1 an ihren beiden Enden mit bereits bekannten Fussstützen 27 (Fig. 2) versehen.

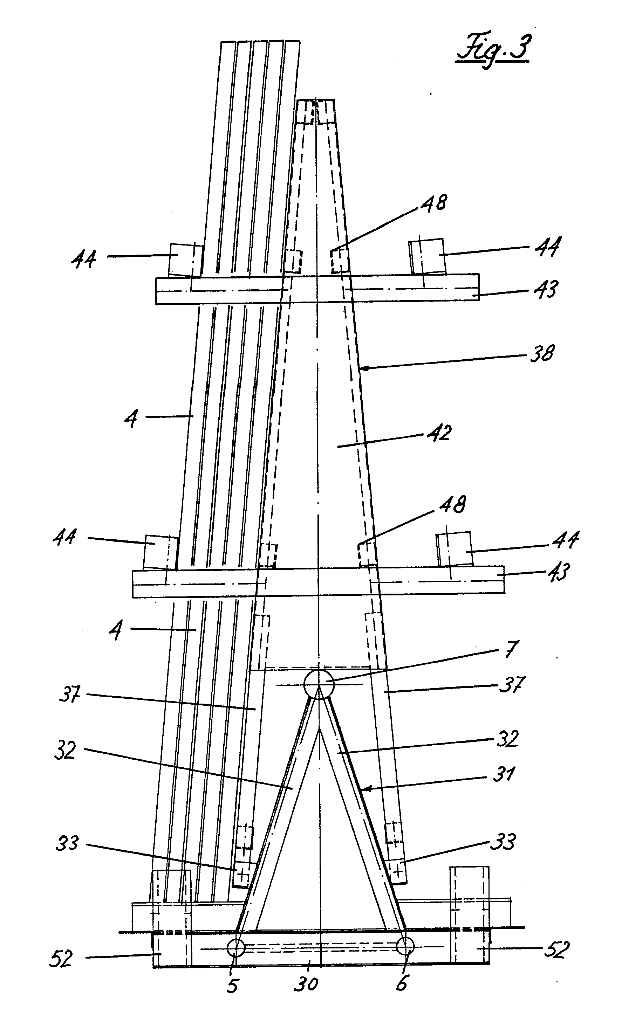

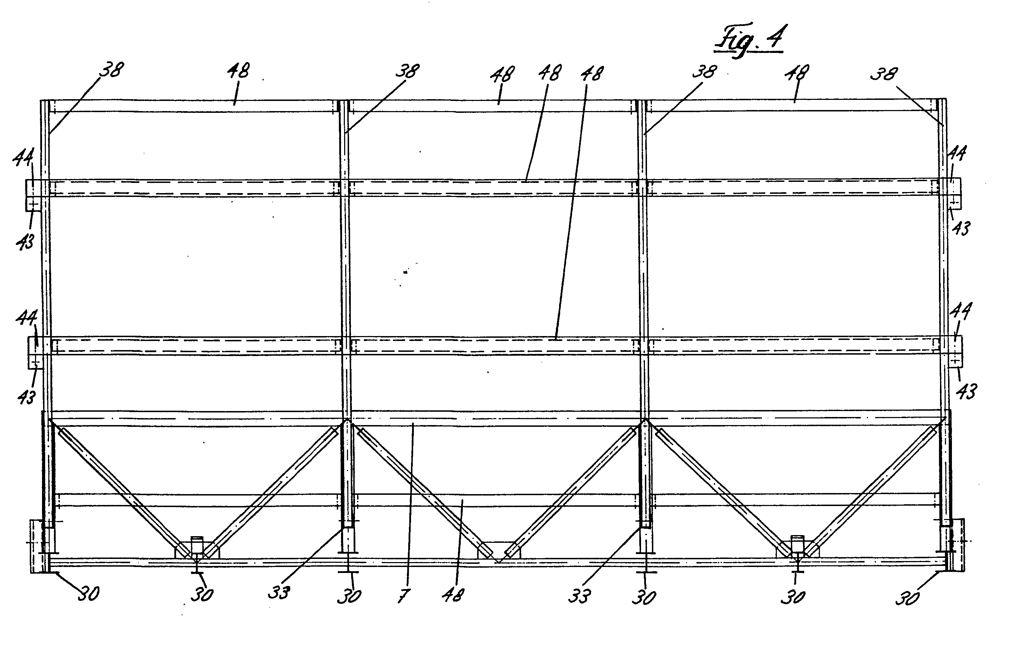

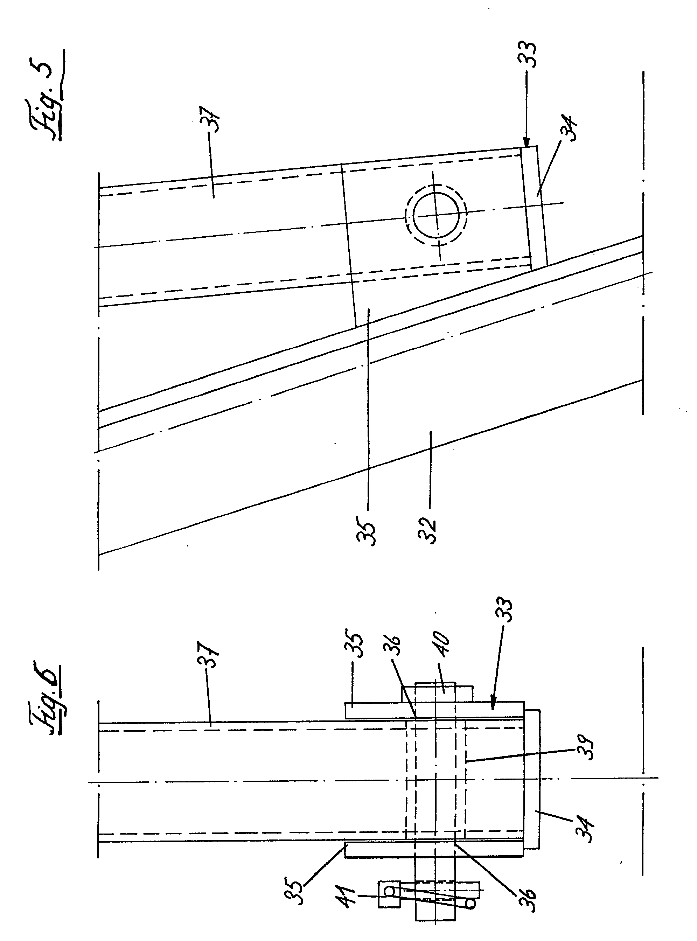

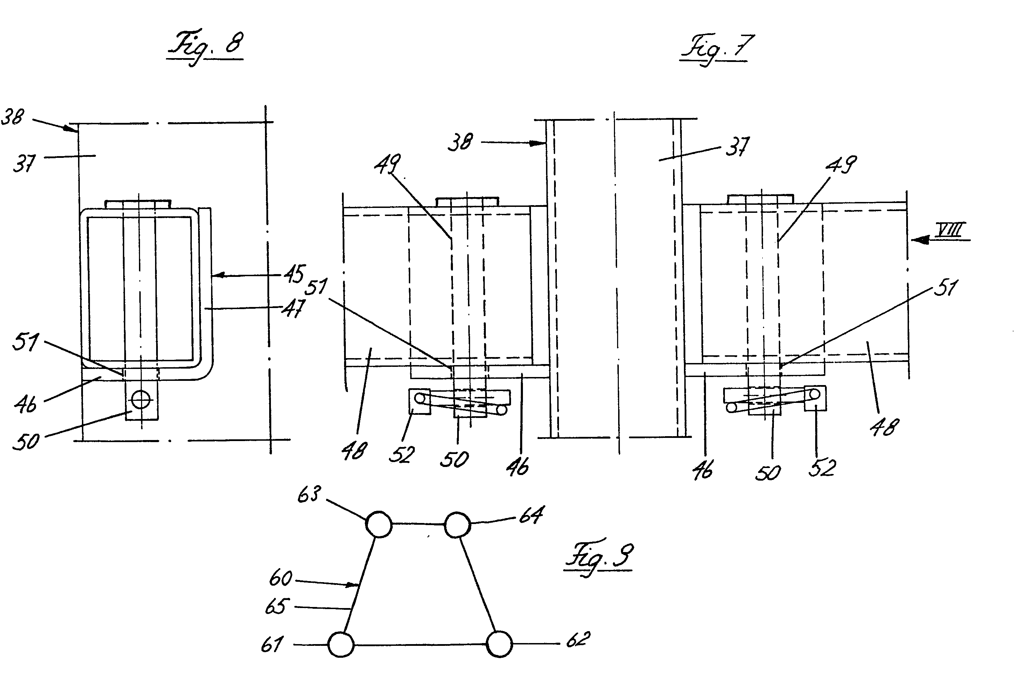

Auch bei der Ausführungsform des neuerungsgemässen Transportgestells nach den Fig. 3 und 4 sind parallel zueinander verlaufende Basisschienen 30 sowie ein Dreigurt 31 vorgesehen. Diese Elemente wurden vorstehend bereits beschrieben.

Abweichend von der bereits beschriebenen Ausführungsform weist der Dreigurt 31 in einer senkrechten Ebene liegende Streben 32 auf, die an ihrer Aussenseite einen nach oben hin offenen Schuh 33 tragen. Dieser Schuh 33 hat eine Basis 34 sowie zwei parallel zueinander verlaufende senkrecht stehende Wangen 35, die mit fluchtenden Bohrungen 36 versehen sind. Der Abstand zwischen den beiden Wangen 35 entspricht dabei etwa der Breite eines Trägers 37 eines Anlagebockes 38. Auch dieser Träger 37 ist an seinem unteren Ende mit einer Bohrung 39 versehen und kann somit durch Einführung eines Sicherungsbolzens 40 am Schuh 33 festgelegt werden. Ein geeigneter Stecker 41 verhindert ein ungewolltes Lösen des Sicherungsbolzens 40, lässt aber ein gewolltes Herausziehen des Sicherungsbolzens 40 ohne weiteres zu.

Der Anlagebock 38 ist in entsprechender Weise an beiden Seiten des Dreigurts 31 festgelegt. Die Träger 37 des Anlagebockes 38 sind durch ein Abdeckblech 42 beiderseits miteinander verbunden und damit starr ausgebildet.

Gemäss Fig. 4 weist das dargestellte Glastransportgestell vier in senkrechten Ebenen verlaufende Anlageböcke 38 auf. Mit den beiden äusseren Anlageböcken 38 sind Schienen 43 verbindbar, welche balkenartige Elemente 44 zur Festlegung der paketartig an das Glastransportgestell angelegten Glasscheiben 4 tragen.

An den einander zugewandten Seiten weisen die Anlageböcke 38 Auflager 45 auf, die aus einem Bodenabschnitt 46 und einem Seitenabschnitt 47 bestehen. Beide Abschnitte 46 und 47 bilden miteinander einen rechten Winkel. In diese jeweils von einem Anlagebock 38 in Richtung auf den benachbarten Anlagebock 38 vorstehenden Auflager 45 werden die Enden von Anlageleisten 48 eingelegt. Die Anlageleisten 48 sind in ihren Endbereichen mit einer durchgehenden Bohrung 49 für einen Sicherungsbolzen 50 versehen. Auch der Bodenabschnitt 46 des Auflagers 45 weist eine Bohrung 51 für den Sicherungsbolzen 50 auf. Im montierten Zustand reicht der Sicherungsbolzen 50 durch die Bohrungen 49 und 51 hindurch und stellt eine feste, aber lösbare Verbindung zwischen Anlageleiste 48 einerseits und Auflager 45 andererseits her. Der Sicherungsbolzen 50 ist mittels eines Stiftes 52 in geeigneter Weise gesichert.

Im montierten Zustand liegen die Aussenflächen der Anlageleisten 48 beiderseits des Glastransportgestells in den gleichen Flächen wie die Aussenflächen der Anlageböcke 38. Die Glasscheiben 4 liegen also sowohl an den Aussenflächen der Anlageböcke 38 als auch an den Aussenflächen der Anlageleisten 48 an. Die mit den Glasscheiben 4 in Berührung kommenden Aussenflächen können mit einem geeigneten nachgiebigen Belag versehen sein.

Wenn auf einem Spezialfahrzeug ein Gestell gemäss den Ausführungsformen nach den Fig. 3 und 4 mit einer Glasladung am Bestimmungsort angekommen ist, so kann es nach dem Entladen demontiert werden, indem zunächst die Anlageleisten 48 von den Anlageböcken 38 gelöst werden und anschliessend dann die Anlageböcke 38 von dem Dreigurt 31 abgenommen werden. Die demontierten Teile können seitlich deben dem Dreigurt 31 untergebracht werden und ermöglichen es, in dem Spezialfahrzeug oberhalb des Dreigurts 31 eine Ladefläche für anderweitige Zuladung zu schaffen.

In den beschriebenen Ausführungsformen kann anstelle des bisher beschriebenen Dreigurts auch ein Viergurt 60 (Fig. 9) verwendet werden, der vier rohrförmige Gurtelemente 61, 62, 63, 64 aufweist, die jeweils paarweise in zwei mit Abstand übereinanderliegenden parallelen Ebenen symmetrisch zu einer senkrechten Ebene angeordnet sind. Dabei ist der Abstand zwischen den oberen Gurtelementen 63, 64 kleiner als der Abstand zwischen den unteren Gurtelementen 61, 62. Die Elemente dieses Gurtes 60 sind durch Streben 65 miteinander verbunden.

Die demontierten Teile können zur Vereinfachung der Montage auch aus Aluminium hergestellt sein.

Auch das Glastransportgestell nach den Fig. 3 und 4 kann mit Fusssicherungen 52 versehen sein, die mit den Enden der beiden äusseren Basisschienen 30 verbunden sind, hier aber nicht im einzelnen erläutert werden müssen.

## Patentansprüche

1. Glastransportgestell mit einer Reihe von parallel zueinander angeordneten, miteinander verbundenen A-förmigen Anlageböcken (15; 38), die gemeinsam mit Anlageleisten (21; 48) zwei nach oben hin aufeinanderzu geneigte Anlageflächen für Glastafeln bilden, und mit quer zur Längsrichtung des Gestells verlaufenden, mit Auflagern für die Glasscheiben versehenen Basisschienen (1; 30), dadurch gekennzeichnet, dass die Anlageböcke (15; 38) miteinander über einen in Längsrichtung des Gestells über dessen gesamte Länge verlaufenden Dreigurt (9; 31) oder einen Viergurt (60) gekoppelt sind, wobei zwei (5, 6; 61, 62) der durchgehenden Elemente (5, 6, 7; 61, 62, 63, 64) des Gurtes (9; 31; 60) in einer waagerechten Ebene liegen, während das dritte Gurtelement (7) bzw. das dritte und vierte Gurtelement (63, 64) mit Abstand darüber angeordnet ist/sind, und wobei ferner die Gurtelemente (5, 6, 7; 61, 62, 63, 64) durch Streben miteinander verbunden sind.

2. Glastransportgestell nach Anspruch 1, dadurch gekennzeichnet, dass die Gurtelemente Rohre (5, 6, 7; 61, 62, 63, 64) sind.

3. Glastransportgestell nach Anspruch 1 oder 2, dadurch gekennzeichnet, dass die beiden unteren Gurtelemente (5, 6; 61, 62) durch Bohrungen in den Basisschienen (1; 30) hindurchgeführt sind.

4. Glastransportgestell nach Anspruch 3, dadurch gekennzeichnet, dass zumindest die beiden äusseren Anlageböcke (15; 38) in Höhe des oberen Gurtelements (7) bzw. der oberen Gurtelemente (63, 64) an diesem abgestützt sind.

5. Glastransportgestell nach einem der vorhergehenden Ansprüche, dadurch gekennzeichnet, dass die Anlageböcke (15; 38) an ihren unteren Enden jeweils mit einer Basisschiene (1; 30) und die Basisschienen (1; 30) über den Gurt (9; 31; 60) miteinander verbunden sind.

6. Glastransportgestell nach einem der vorhergehenden Ansprüche, dadurch gekennzeichnet, dass die Anlageböcke (38) lösbar direkt oder indirekt mit dem Gurt (31; 60) verbunden sind.

7. Glastransportgestell nach Anspruch 6, dadurch gekennzeichnet, dass an Streben des Gurtes (31; 60) Taschen (33) zur lösbaren Aufnahme der unteren Enden der Anlageböcke (38) vorgesehen sind.

8. Glastransportgestell nach Anspruch 7, dadurch gekennzeichnet, dass die unteren Enden der Anlageböcke (38) mit den Taschen (33) über Sicherungsbolzen (40) lösbar verbunden ind.

9. Glastransportgestell nach einem der vorhergehenden Ansprüche, dadurch gekennzeichnet, dass die Anlageleisten (48) jeweils zwischen zwei Anlageböcken (38) sich erstrecken und an ihren Enden in an den Anlageböcken (38) vorgesehene Auflager lösbar eingreifen.

10. Glastransportgestell nach einem der vorgehenden Ansprüche, dadurch gekennzeichnet, dass die Anlageböcke (15; 38) und/oder die Anlageleisten (21; 48) im wesentlichen aus Leichtmetall bestehen.

11. Glastransportgestell nach einem der vorhergehenden Ansprüche, dadurch gekennzeichnet, dass es als Innenladergestell ausgebildet ist.

12. Glastransportgestell nach einem der Ansprüche 1 bis 5, dadurch gekennzeichnet, dass die Anlageböcke (15) direkt oder indirekt mit dem Gurt (9; 60) unlösbar verbunden und miteinander verstrebt sind, und dass das Gestell mit einer Kranaufhängung (23) versehen ist.

## Claims

1. Glass transport rack with a row of A-shaped standards (15; 38) arranged parallel and connected to each other and forming, together with contact strips (21; 48), two contact surfaces inclined upwards towards each other for sheets of glass, and with base rails (1; 30) extending perpendicularly to the longitudinal direction of the rack and provided with supports for the glass panes, characterised in that the standards (15; 38) are coupled together by a triangular girder (9; 31) or quadrilateral girder (60) extending in the longitudinal direction of the rack along the whole length thereof, two (5, 6; 61, 62) of the booms (5, 6, 7; 62, 63, 64) of the girder (9; 31; 60) being located in a horizontal plane, while the third boom (7) or third and fourth booms (63, 64) are disposed at a distance thereabove, and the booms (5, 6, 7; 61, 62, 63, 64) being furthermore joined together by struts.

2. Glass transport rack according to claim 1, characterised in that the booms are tubes (5, 6, 7; 61, 62, 63, 64).

3. Glass transport rack according to claim 1 or 2, characterised in that the two lower booms (5, 6; 61, 62) pass through bores in the base rails (1; 30).

4. Glass transport rack according to claim 3, characterised in that at least the two outer standards (15; 38), at the level of the upper boom (7) or upper booms (63, 64), are supported against same.

5. Glass transport rack according to any of the preceding claims, characterised in that the standards (15; 30) are each joined to a base rail (1; 30) at their lower ends, and the base rails (1; 30) are joined together by the girder (9; 31; 60).

6. Glass transport rack according to any of the preceding claims, characterised in that the standards (38) are directly or indirectly releasably connected to the girder (31; 60).

7. Glass transport rack according to claim 6, characterised in that on struts of the girder (31; 60) are provided sockets (33) for releasably receiving the lower ends of the standards (38).

8. Glass transport rack according to claim 7, characterised in that the lower ends of the standards (38) are releasably connected to the sockets (33) by safety bolts (40).

9. Glass transport rack according to any of the preceding claims, characterised in that the contact strips (48) in each case extend between two standards (38), and engage releasably at their ends in supports provided on the standards (38).

10. Glass transport rack according to any of the preceding claims, characterised in that the standards (15; 38) and/or the contact strips (21; 48) are essentially made of light metal.

11. Glass transport rack according to any of the preceding claims, characterised in that it is constructed as an indoor loader rack.

12. Glass transport rack according to any of claims 1 to 5, characterised in that the standards (15) are directly or indirectly connected non-releasably to the girder (9; 60) and braced together, and the rack is provided with crane suspension means (23).

**Revendications**

1. Bâti de transport de verre, avec une série de chevalets d'appui (15; 38) en forme d'A, disposés parallèlement les uns aux autres et reliés entre eux, qui forment, en association avec des barres d'appui (21; 48), deux surfaces d'appui pour des plaques de verre, inclinées l'une par rapport à l'autre vers le haut, et avec des patins de base (1; 30) s'étendant transversalement à la direction longitudinale du bâti et pourvus d'appuis pour les plaques de verre, caractérisé en ce que les chevalets d'appui (15; 38) sont accouplés les uns aux autres par l'intermédiaire d'une membrure à trois branches (9; 31) ou d'une membrure à quatre branches (60) s'étendant dans la direction longitudinale du bâti sur toute sa longueur, où deux (5, 6; 61, 62) des éléments continus (5, 6, 7; 61, 62, 63, 64) de la membrure (9; 31; 60) se trouvent dans un plan horizontal, tandis que le troisième élément de membrure (7), respectivement le troisième et le quatrième élément de membrure (63, 64) est (sont) disposé(s) à quelque distance au-dessus, et où encore, les éléments de membrure (5, 6, 7; 61, 62, 63, 64) sont reliés entre eux par des étançons.

2. Bâti de transport de verre suivant la revendication 1, caractérisé en ce que les éléments de membrure sont des tubes (5, 6, 7; 61, 62, 63, 64).

3. Bâti de transport de verre suivant la revendication 1 ou 2, caractérisé en ce que les deux éléments de membrure inférieurs (5, 6; 61, 62) passent à travers des forures des patins de base (1; 30).

4. Bâti de transport de verre suivant la revendication 3, caractérisé en ce qu'au moins les deux chevalets d'appui extérieurs (15; 38) sont, à la hauteur de l'élément de membrure supérieur (7) ou des éléments de membrure supérieurs (63, 64), appuyés sur ceux-ci.

5. Bâti de transport de verre suivant l'une quelconque des revendications précédentes, caractérisé en ce que les chevalets d'appui (15; 38) sont reliés à leurs extrémités, chaque fois, à un patin de base (1; 30) et en ce que les patins de base (1; 30) sont reliés entre eux par la membrure (9; 31; 60).

6. Bâti de transport de verre suivant l'une quelconque des revendications précédentes, caractérisé en ce que les chevalets d'appui (38) sont reliés directement ou indirectement, de manière amovible, à la membrure (31; 60).

7. Bâti de transport de verre suivant la revendication 6, caractérisé en ce que, sur des étançons de la membrure (31; 60) sont prévues des poches (33) pour recevoir de façon amovible les extrémités inférieures des chevalets d'appui (38).

8. Bâti de transport de verre suivant la revendication 7, caractérisé en ce que les extrémités inférieures des chevalets d'appui (38) sont reliées de manière amovible aux poches (33) par des boulons de sûreté (40).

9. Bâti de transport de verre suivant l'une quelconque des revendications précédentes, caractérisé en ce que les barres d'appui (48) s'étendent chaque fois entre deux chevalets d'appui (38) et pénètrent par leurs extrémités dans des appuis prévus sur les chevalets d'appui (38).

10. Bâti de transport de verre suivant l'une quelconque des revendications précédentes, caractérisé en ce que les chevalets d'appui (15; 38) et/ou les barres d'appui (21; 48) sont en principe en métal léger.

11. Bâti de transport de verre suivant l'une quelconque des revendications précédentes, caractérisé en ce qu'il est conformé en bâti pour chargement intérieur.

12. Bâti de transport de verre suivant l'une des revendications 1 à 5, caractérisé en ce que les chevalets d'appui (15) sont reliés directement ou indirectement à la membrure (9; 60) de façon non amovible et sont étançonnés entre eux, et en ce que le bâti est pourvu d'un dispositif (23) de suspension à une grue.

0 084 858

Fig. 1

Fig.2

*Fig. 3*

_Fig. 4_

Fig. 5

Fig. 6

Fig. 8                Fig. 7

Fig. 9

0 084 858